# EUROPEAN PATENT SPECIFICATION

(11) **EP 2 918 490 B1**
(45) Date of publication and mention of the grant of the patent: **16.09.2020**
(21) Application number: 15159029.6
(22) Date of filing: 13.03.2015
(51) Int. Cl.: B62M 6/50, B60L 3/00

(54) **ELECTRIC ASSIST BICYCLE**
FAHRRAD MIT ELEKTRISCHER UNTERSTÜTZUNG
VÉLO À ASSISTANCE ÉLECTRIQUE

(30) Priority: 14.03.2014 JP 2014052026
(43) Date of publication of application: 16.09.2015
(73) Proprietor: Yamaha Hatsudoki Kabushiki Kaisha, Iwata-shi, Shizuoka 438-8501 (JP)
(72) Inventor: Arimune, Nobuyasu, Iwata-shi, Shizuoka 438-8501 (JP); Negoro, Masanori, Iwata-shi, Shizuoka 438-8501 (JP); Takeda, Tomoyuki, Iwata-shi, Shizuoka 438-8501 (JP); Kinpara, Yuki, Iwata-shi, Shizuoka 438-8501 (JP)
(74) Representative: Grünecker Patent- und Rechtsanwälte PartG mbB

(56) References cited:
- EP-A1- 0 697 331
- DE-A1- 19 640 248
- DE-A1-102010 039 860
- GB-A- 2 419 459
- JP-A- 2001 122 180
- US-A- 5 963 140

## Description

The present invention relates to an electric assist bicycle according to the preamble of independent claim 1. Such an electric assist bicycle can be taken from the prior art document JP 2001-122180 A. Prior art document EP 0 697 331 A1 discloses an electric assist bicycle having a driving system including an electric motor for assisting a pedal force applied to a pedal and a motor controller configured to control the electric motor. A battery unit is attainable to and detachable from a bicycle body. The battery unit includes a battery configured to accumulate electronic power to be supplied to the electric motor and an indicator. The electric assist bicycle further comprises a diagnostic unit configured to detect abnormality of the driving system. An information transmission path is configured to transmit information from the driving system to the battery unit. The indicator of the battery unit is configured to indicate a remaining power of the battery. Moreover, the prior art document US 5,963,140 discloses a remaining battery energy indicating instrument, wherein the battery is provided with a controller.

In the related art, an electric assist bicycle including an electric motor for assisting a pedal force which is a force applied to a pedal by a user and a battery for supplying electronic power to the electric motor is used. An electric assist bicycle to be rented by a user is disclosed in JP 2013-32695 A. The electric assist bicycle is stored in a parking station set in a town and a user mounts a battery owned himself or herself on the bicycle in the parking station and thereby the user can rent the bicycle.

JP 2006-130991 A describes an electric assist bicycle where a battery is attainable to and detachable from a handle. Information such as a remaining power of the battery, a running speed, and the like is indicated by an indicator of the battery. Accordingly, since it is not necessary for the indicator to be provided in a bicycle body, manufacturing costs of the bicycle can be reduced.

The battery used in the rental type electric assist bicycle disclosed in JP 2013-32695 A is necessary to be small because the battery is carried by the user until the user mounts the battery on the bicycle. If a size of the battery including the indicator disclosed in JP 2006-130991 A is designed to be small, the indicator is forced to be simple. The simple indicator becomes low in resolution of the indication about the remaining power of the battery. For example, when the indicator employs LEDs, the remaining power of the battery can be indicated in three levels or four levels. However, it is difficult to indicate the remaining power in a lot of levels beyond three or four levels because a lot of LEDs and a space for the LEDs are required to the battery unit. Accordingly, when using such an indicator, a decrease in an assist force due to abnormality of a driving system of the bicycle may be erroneously recognized, by a user, as a decrease in the assist force due to the lack of the remaining power of the battery. For example, when the abnormality of the driving system occurs and decreases the assist force in a state where the indicator indicates that the remaining power of the battery is low, the user may erroneously recognize that the assist force decreases because the remaining power of the battery becomes zero.

Furthermore, it is preferable that the remaining power of the battery is indicated on the indicator in a state where the battery is removed from the electric assist bicycle. However, when using the indicator in a situation where the battery is removed from the electric assist bicycle, wasted electronic power of the battery may be consumed by the indication of the remaining power of the battery.

A first object of the invention is to provide an electric assist bicycle in which a user can appropriately recognize a cause of a decrease in an assist force while using an indicator provided in a battery unit.

A second object of the invention is to provide an electric assist bicycle in which information desired by a user such as a remaining power of the battery can be indicated through an indicator of a battery unit in either of a case where the battery unit is mounted on a bicycle body and a case where the battery unit is not mounted on the bicycle body, and electronic power consumption in the indicator can be reduced when the battery unit is not mounted on the bicycle body.

According to the present invention at least one of said objects is solved by an electric assist bicycle having the features of independent claim 1. Preferred embodiments are laid down in the dependent claims.
(1) An electric assist bicycle includes a driving system that includes a driving system including an electric motor for assisting a pedal force applied to a pedal and a motor controller configured to control the electric motor; a battery unit attainable to and detachable from a bicycle body, the battery unit including a battery which accumulates electronic power to be supplied to the electric motor, a controller configured to control the battery, and an indicator; a diagnostic unit configured to detect abnormality of the driving system; and an information transmission path that transmits information indicating the abnormality of the driving system from the driving system to the battery unit. The indicator of the battery unit is configured to indicate a remaining power of the battery and the abnormality of the driving system.
   Accordingly, when the assist force of the electric motor is decreased due to the abnormality of the driving system, it is possible to prevent erroneous recognition by a user that the decrease is due to zero of the remaining power of the battery.
(2) In an embodiment, the indicator of the battery unit may be configured to switch an indication thereof between the remaining power of the battery and the abnormality of the driving system. According to the embodiment, the indicator can be simplified to decrease the size of the battery unit.
(3) In an embodiment, the indicator of the battery unit may be configured to indicate the abnormality of the driving system in priority to the remaining power of the battery. According to the aspect, when the abnormality occurs, the user can easily recognize the abnormality.
(4) In an embodiment, the diagnostic unit may further have a function for detecting abnormality of the battery. The indicator may be configured to indicate the abnormality of the driving system and the abnormality of the battery in different forms from each other. According to the aspect, the user can determine whether the cause of the abnormality of the electric assist bicycle is due to the driving system of the bicycle or the battery unit while using the indicator provided in the battery unit.
(5) Furthermore, in the embodiment, the indicator may include at least one light emitting portion, and the indicator may be configured to drive the at least one light emitting portion in the different forms from each other when indicating the remaining power of the battery and when indicating the abnormality of the driving system. According to the embodiment, the indicator can be simplified to decrease the size of the battery unit.
(6) An electric assist bicycle includes a driving system including an electric motor for assisting a pedal force applied to a pedal and a motor controller configured to control the electric motor; a battery unit attainable to and detachable from a bicycle body, the battery unit including a battery which accumulates electronic power to be supplied to the electric motor, a controller configured to control the battery, and an indicator; a diagnostic unit configured to detect abnormality of the driving system; and an information transmission path that transmits information indicating the abnormality of the driving system from the driving system to the battery unit. The indicator of the battery unit is configured to indicate a remaining power of the battery, the abnormality of the battery, and the abnormality of the driving system.
   Accordingly, when the assist force of the electric motor is decreased due to the abnormality of the driving system, it is possible to prevent erroneous recognition by a user that the decrease is due to zero of the remaining power of the battery.
(7) An electric assist bicycle includes a driving system that includes a driving system including an electric motor for assisting a pedal force applied to a pedal and a motor controller configured to control the electric motor; and a battery unit attainable to and detachable from a bicycle body, the battery unit including a battery which accumulates electronic power to be supplied to the electric motor, an indicator disposed further forward than a saddle for a user to sit and configured to indicate a remaining power of the battery, and a controller configured to control the battery and the indicator. The controller of the battery unit is configured to set a predetermined limit on the indication of the indicator when the battery unit is removed from a bicycle body, and The controller of the battery unit is configured to ease the predetermined limit when the battery unit is mounted on the bicycle body. In an example, when the motor controller is actuated according to a predetermined operation in a state where the battery unit is mounted on the bicycle body, the predetermined limit is eased. In another example, in a case a switch or a sensor for detecting that the battery unit is mounted on the bicycle body is provided in the battery unit, the predetermined limit may be eased when the switch or the sensor detects that the battery unit is mounted on the bicycle body.
   Accordingly, information desired by the user such as the remaining power of the battery can be presented with the indicator of the battery unit in either of a state where the battery unit is mounted on the bicycle body and a state where the battery unit is not mounted on the bicycle body, and electronic power consumption in the indicator can be reduced in the state where the battery unit is not mounted on the bicycle body.
(8) In an embodiment, the predetermined limit on the indication of the indicator may be a limit on a time for indicating the information.
(9) In an embodiment, the controller of the battery unit may include an operation portion for receiving an operation by the user, and the controller of the battery unit may be configured to release the predetermined limit when the operation portion receives the operation by the user in a state where the battery is removed from the bicycle body.
(10) In an embodiment, the controller of the battery unit may be configured to indicate, on the indicator, bicycle usage information that is information regarding usage of the bicycle by a user. According to the embodiment, it is possible to improve convenience of the electric assist bicycle.
(11) In an embodiment, the battery unit may include a memory that stores the bicycle usage information, and the memory may be configured to continue to store the bicycle usage information even after the battery unit is removed from the bicycle body. According to the embodiment, it is possible to manage a usage history of the user in the battery unit.

In an embodiment, the controller of the battery may calculate new bicycle usage information based on the bicycle usage information stored in the memory after the battery unit is removed from the bicycle body and bicycle usage information that is newly obtained when the battery is mounted on the bicycle body again. According to the embodiment, even if the user switches bicycles, it is possible to manage the usage history by using the battery unit.

### BRIEF DESCRIPTION OF THE DRAWINGS

[Fig. 1] Fig. 1 is a view illustrating a management system of an electric assist bicycle according to an embodiment.
[Fig. 2] Fig. 2 is a view illustrating the electric assist bicycle placed in a parking station. Fig. 2(a) is a side view and Fig. 2(b) is a plan view.
[Fig. 3] Fig. 3 is a block diagram illustrating a driving system and a battery unit included in the electric assist bicycle.
[Fig. 4] Fig. 4 is a view illustrating an example of an indication and operation unit including an indicator and an operation portion.
[Fig. 5] Fig. 5 is a block diagram illustrating a process that is performed by a motor controller and a process performed by a battery management controller (BMC).
[Fig. 6] Fig. 6 is a flowchart illustrating a process that is performed by the BMC when the battery unit is mounted on a bicycle body.
[Fig. 7] Fig. 7 is a block diagram illustrating a modified example of a battery unit. In Fig. 7, the battery configured to have a plurality of cells is omitted.
[Fig. 8] Fig. 8 is a view illustrating a modified example of the indication and operation unit.

### DETAILED DESCRIPTION OF THE EMBODIMENTS

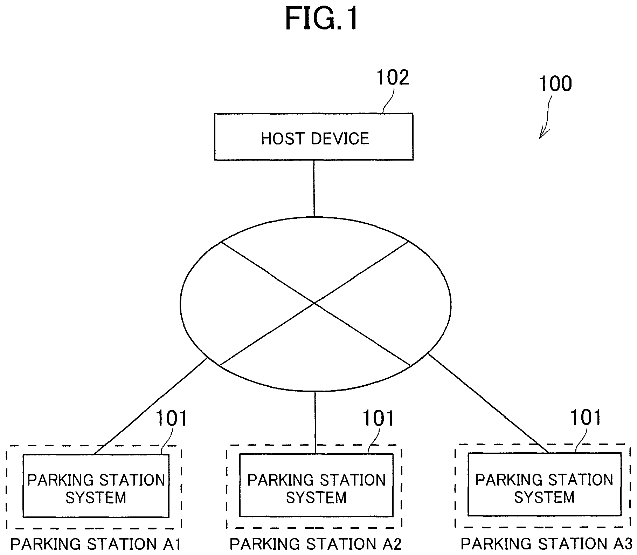

Hereinafter, an embodiment will be described with reference to the drawings. Fig. 1 is a view illustrating a management system 100 of an electric assist bicycle 1 according to the embodiment.

The management system 100 is a system for managing a plurality of electric assist bicycles 1 to be rented by a pre-registered user. The management system 100 has parking station systems 101 disposed in parking stations A1, A2, and A3 of the electric assist bicycle 1. Preferably, as illustrated in Fig. 1, the management system 100 has a plurality of station systems 101 and the plurality of station systems are respectively disposed in a plurality of parking stations A1, A2, and A3 set in a town. The user can return the bicycle to the same station as the station from which the bicycle is rented or to other station. The number of parking stations is not limited to three. That is, the management system 100 may have only one parking station system 101. The management system 100 includes a host device 102. The host device 102 has a database for a plurality of users and manages a usage state of the bicycle by the user. A station system 101 is configured to communicate with the host device 102 through a communication network such as Internet or a private line.

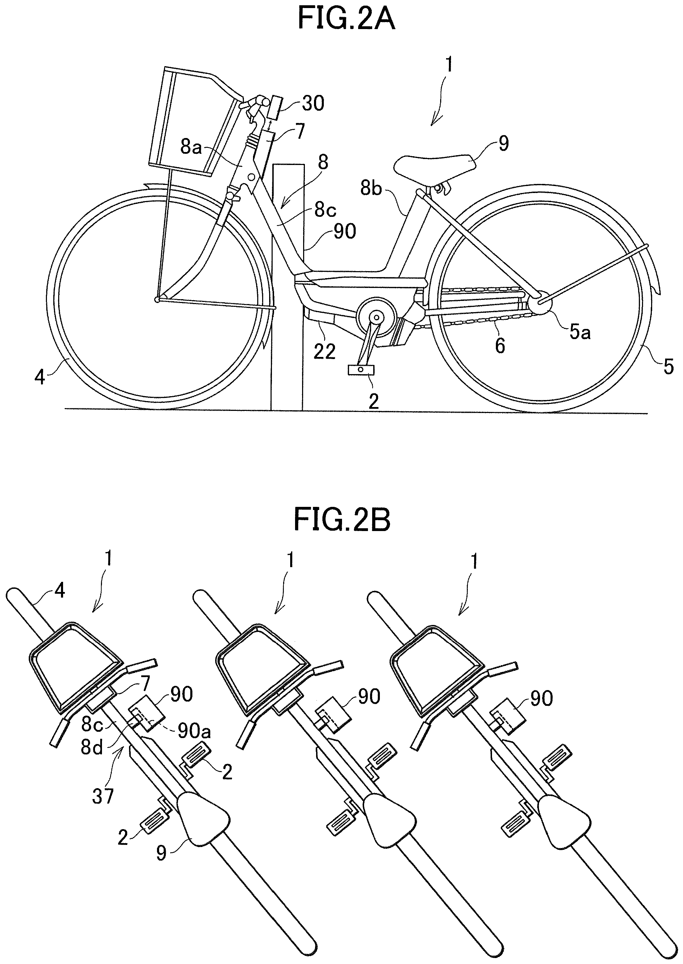

Fig. 2 is a view illustrating the electric assist bicycle 1 disposed in the parking station. Fig. 2(a) is a side view and Fig. 2(b) is a plan view.

As illustrated in Fig. 2(a), the electric assist bicycle 1 has a pedal 2 and a pedal crank 3 that is rotated by a user pedaling the pedal 2. Furthermore, the electric assist bicycle 1 includes an electric motor 22 for assisting a pedal force applied to the pedal 2 by a user. A resultant force of a force (torque) applied from the pedal 2 to the pedal crank 3 and a force (torque) of the electric motor 22 is transmitted to a rear wheel 5. In an example of the electric assist bicycle, the pedal crank 3 is connected to a power transmission member to the rear wheel 5 such as a chain 6. Further, the electric motor 22 is connected to the power transmission member via a speed reduction mechanism. In this case, the torque applied to the pedal crank 3 and the torque of the electric motor 22 are combined in the power transmission member. A force transmitted to the power transmission member is applied to the rear wheel 5 through a speed change mechanism. A position of the electric motor 22 in a power transmission path from the pedal crank 3 to the rear wheel 5 can be variously changed. For example, the electric motor 22 may be disposed further on a downstream side than the chain 6 or the speed change mechanism described above in the power transmission path. In this case, for example, the electric motor 22 may be provided at a hub 5a of the rear wheel 5 or may be provided at a hub of a front wheel 4.

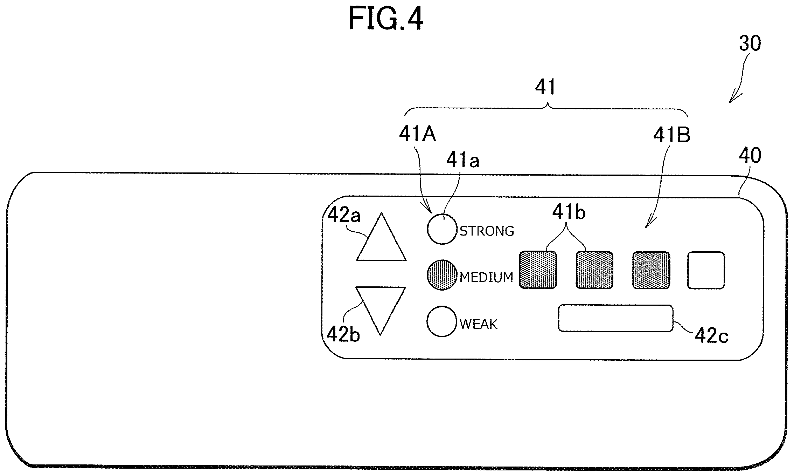

The electric assist bicycle 1 includes a battery unit 30 to supply driving electronic power to the electric motor 22 and a battery receptacle 7. The battery unit 30 is attainable to and detachable from the battery receptacle 7. As described in below, the battery unit 30 includes an indicator 41 (see Fig. 4). In a state where the battery unit 30 is mounted on the battery receptacle 7, the indicator 41 is positioned further forward than a saddle 9 for user to sit. Thus, when using the electric assist bicycle 1, the user can visually recognize the indicator of the battery unit 30. Furthermore, it is not necessary to provide the indicator in the bicycle body of the electric assist bicycle 1 and it is possible to decrease manufacturing costs of the electric assist bicycle 1. In an example of the electric assist bicycle 1, as illustrated in Fig. 2(b), the battery receptacle 7 may be fixed to a head pipe 8a supporting a handle stem. As long as the user can visually recognize the indicator when using the electric assist bicycle 1, the fixing position of the battery receptacle 7 is not necessarily limited to the head pipe 8a.

As illustrated in Fig. 2(b), the plurality of electric assist bicycles 1 are stored in the parking station set in a town. In an example, the battery unit 30 is owned by individual user and the user installs the battery unit 30 which is owned by himself/herself to the battery receptacle 7, and thereby the electric assist bicycle 1 can be used.

As illustrated in Fig. 2(b), a plurality of locking devices 90 are provided in the parking station. The electric assist bicycle 1 has a locked portion 8d to be connected to the locking device 90. Preferably, the locking device 90 and the locked portion 8d are configured such that a position and a posture of the electric assist bicycle 1 are fixed. As illustrated in Fig. 2(b), for example, the locked portion 8d extends laterally from a bicycle body frame 8 (more specifically, a tube 8c extending obliquely rearward and downward from the head pipe 8a in Fig. 2(b)). The locked portion 8d is fitted to a locking portion (receiving section) 90a formed in the locking device 90. Then, the locked portion 8d is locked (held) by a locking mechanism in the locking portion 90a. The locking member of the electric assist bicycle 1 is not limited to this. For example, the locking device 90 may employ a chain, and the front wheel 4 or the rear wheel 5 of the electric assist bicycle 1 may be connected to the locking device 90 through the chain. That is, the front wheel 4 or the rear wheel 5 may be used as the locked portion.

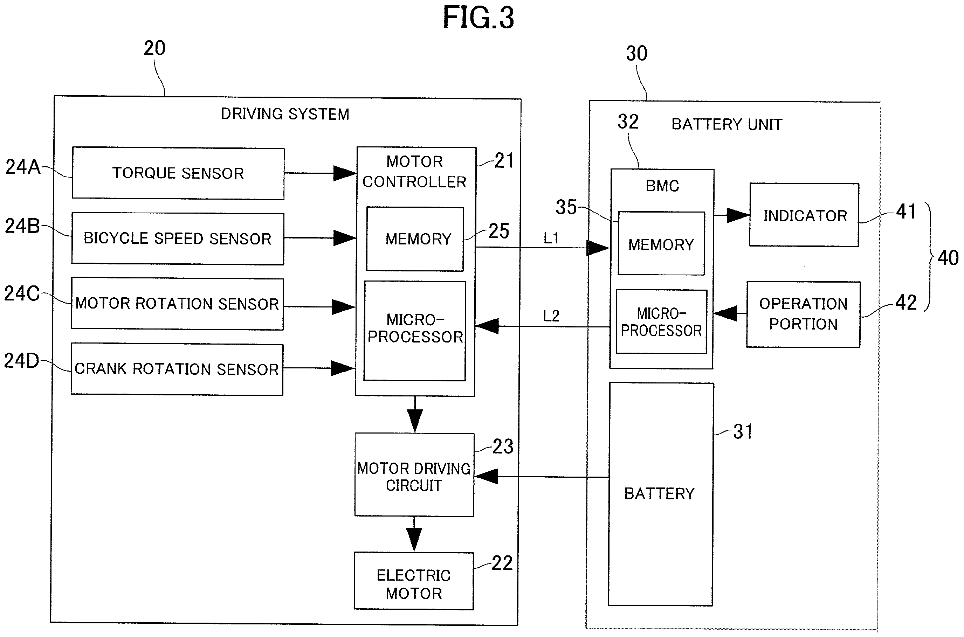

Fig. 3 is a block diagram illustrating a driving system 20 and the battery unit 30 included in the electric assist bicycle 1.

The battery unit 30 includes a battery 31 including a plurality of cells which accumulates electronic power to be supplied to the electric motor 22. The battery unit 30 includes a battery management controller (BMC) 32. The BMC 32 includes a microprocessor and a memory 35 in which a program to be executed by the microprocessor is recorded. The BMC 32 monitors a state (for example, a voltage, a current, or a temperature of the battery cell) of the battery 31 or calculates a remaining power of the battery 31. A process that is executed by the BMC 32 will be described below in detail.

The battery unit 30 includes the indicator 41 and an operation portion 42. The indicator 41 indicates the remaining power of the battery 31, a control mode of the electric motor 22, or the like. The operation portion 42 is configured to receive an operation of the user and, for example, includes buttons and the like for switching the control mode by the user. As described above, the indicator 41 of the present embodiment is disposed in a position in which the user can visually recognize the indicator 41 during riding the electric assist bicycle 1. Furthermore, the operation portion 42 is also disposed in a position in which the user can operate the operation portion 42 during riding the electric assist bicycle 1. For example, the indicator 41 and the operation portion 42 may be provided on an upper surface of the battery unit 30.

The driving system 20 includes a motor controller 21 and a motor driving circuit 23. The motor controller 21 includes a microprocessor and a memory 25 in which a program to be executed by the microprocessor is stored. The motor controller 21 is configured to control the electric motor 22 based on the pedal force applied to the pedal 2 by the user.

As illustrated in Fig. 2, for example, the driving system 20 includes a torque sensor 24A for detecting the torque applied to the pedal crank 3 and a bicycle speed sensor 24B for detecting a bicycle speed. The driving system 20 further may include a motor rotation sensor 24C for detecting a rotation speed of the electric motor 22 and a crank rotation sensor 24D for detecting a rotation speed of the pedal crank 3. The motor controller 21 is configured to control the electric motor 22 based on signals input from the sensors. For example, the motor controller 21 calculates a speed change levels (speed change ratio in the speed change mechanism) based on an output signal of the bicycle speed sensor 24B and an output signal of the motor rotation sensor 24C. Furthermore, the motor controller 21 detects the pedal force of the user based on an output signal of the torque sensor 24A and calculates a rotation speed of the pedal crank 3 based on an output signal of the crank rotation sensor 24D. Then, the motor controller 21 calculates a command value of an electronic current supplied to the electric motor 22 based on the pedal force of the user, the speed change ratio, and a rotation speed of the pedal crank 3 and inputs a signal corresponding to the command value into the motor driving circuit 23. The motor driving circuit 23 receives electronic power from the battery unit 30 and supplies the electronic current corresponding to the command value received from the motor controller 21 to the electric motor 22.

Each of the battery unit 30 and the driving system 20 includes a connector (not illustrated) for supplying the electronic power of the battery 31 to the motor driving circuit 23. Furthermore, the BMC 32 and the motor controller 21 are configured to communicate with each other through communication interfaces (not illustrated) and information transmission paths (for example, communication wires) L1 and L2 connected to the two communication interfaces. Moreover, the information transmission paths L1 and L2 do not necessarily employ two communication wires. That is, the motor controller 21 and the BMC 32 may transmit and receive various types of information via one communication wire.

As described above, the battery unit 30 includes the indicator 41 and the operation portion 42. Fig. 4 is a view illustrating an example of an indication/operation portion 40 including the indicator 41 and the operation portion 42. For example, the motor controller 21 may have, as a control mode of the electric motor 22, a plurality of control modes in which levels of an assist force of the electric motor 22 are different from each other. The operation portion 42 includes a mode selection operation portion (an up button 42a and a down button 42b in Fig. 4) for switching the control mode. Furthermore, the indicator 41 has a mode indicating portion 41A indicating a current control mode. For example, as illustrated in Fig. 4, the mode indicating portion 41A includes a plurality of light emitting portions 41a employing LEDs or the like. Furthermore, the indicator 41 has a remaining power indicating portion 41B for indicating the remaining power of the battery 31. In an example, as illustrated in Fig. 4, the remaining power indicating portion 41B also includes a plurality of light emitting portions 41b employing the LEDs or the like.

The configuration of the indication/operation portion 40 is not limited to the present embodiment illustrated in Fig. 4 and may be variously modified. For example, the indication/operation portion 40 may include a display screen capable of displaying characters or symbols as the remaining power indicating portion 41B. In this case, a remaining distance or a remaining time, or the like capable of running by using assist of the electric motor 22 may be displayed in the remaining power indicating portion 41B in addition to the remaining power of the battery 31. Such an example of the indicator 41 will be described below.

The BMC 32 is configured to set a predetermined limit on the indication of the indicator 41 in a state where the battery unit 30 is removed from the bicycle body. The BMC 32 is configured to ease the limit described above in a state where the battery unit 30 is mounted on the bicycle body.

An example of the predetermined limit is a limit on a indication time of the indicator 41. When the battery unit 30 is not mounted on the bicycle body, the BMC 32 drives the remaining power indicating portion 41B and indicates the remaining power of the battery 31 only for a predetermined time (for example, several tens of seconds) after an operation button 42c (see Fig. 4) provided in the operation portion 42 is turned on. Then, the BMC 32 stops the indication of the remaining power of the battery 31 when the predetermined time has elapsed (that is, the remaining power indicating portion 41B is turned off, hereinafter, the time is referred to as an indication permission time). Meanwhile, when the battery unit 30 is mounted on the bicycle body, the BMC 32 indicates the information desired by the user through the indicator 41 even after the indication permission time has elapsed. For example, the BMC 32 always indicates the remaining power of the battery 31. Furthermore, the BMC 32 may stop the indication of the remaining power of the battery 31 when a time that is set longer than the indication permission time described above has elapsed. Thus, when the battery unit 30 is mounted on the bicycle body, the information desired by the user can be indicated through the indicator 41. Furthermore, when the battery unit 30 is not mounted on the bicycle body, electronic power consumption of the battery unit 30 can be reduced.

Another example of the predetermined limit is a limit of brightness of the indicator 41. Specifically, in a case where the battery unit 30 is not mounted on the bicycle body, the BMC 32 may decrease the brightness of the remaining power indicating portion 41B compared to a case where the battery unit 30 is mounted on the bicycle body.

The motor controller 21 has a function for detecting abnormality of the driving system 20. Furthermore, the BMC 32 has a function for detecting abnormality of the battery 31. When the abnormality of the driving system 20 is detected in a state where the battery unit 30 is mounted on the bicycle body, the BMC 32 receives information indicating the detection of the abnormality from the motor controller 21 and the indicator 41 indicates the abnormality. Furthermore, when the abnormality of the battery 31 is detected in a state where the battery unit 30 is mounted on the bicycle body, the indicator 41 indicates the abnormality. Thus, if the assist force of the electric motor 22 is decreased, the user can appropriately recognize whether or not the cause of the decrease in the assist force is due to the lack of the remaining power of the battery 31 and whether or not the cause of the decrease in the assist force is due to the abnormality of one of the driving system 20 and the battery 31.

In an example, the BMC 32 is configured to switch the indication thereof between the remaining power of the battery 31 and the abnormality, using a common portion of the indicator 41. That is, when the abnormality of the battery 31 is detected, the BMC 32 drives the common portion in the indicator 41 in a form different from normal state (a state where abnormality is not detected) and notifies the abnormality to the user. For example, in normal state, the BMC 32 indicates the remaining power of the battery 31 with the remaining power indicating portion 41B. When the abnormality is detected, the BMC 32 drives the remaining power indicating portion 41B in a form different from the normal state and notifies the occurrence of the abnormality to the user. For example, blinking frequency or brightness, emission color, or the like of a light emitting portion 41b of the remaining power indicating portion 41B are different from each other in a case of the normal state and in abnormal state. Thus, it is possible to simplify the configuration of the indicator 41 to decrease the size of the battery unit 30 and indicate the cause of the decrease in the assist force to the user.

Furthermore, in the present embodiment, a form in which the BMC 32 drives the indicator 41 when the abnormality of the battery 31 is detected may be different from a form in which the BMC 32 drives the indicator 41 when the abnormality of the driving system 20 is detected. For example, the emission color or the blinking frequency of the light emitting portion 41b may be different. Thus, the user can determine whether or not the abnormality occurs in the battery 31 or whether or not the abnormality occurs in the driving system 20.

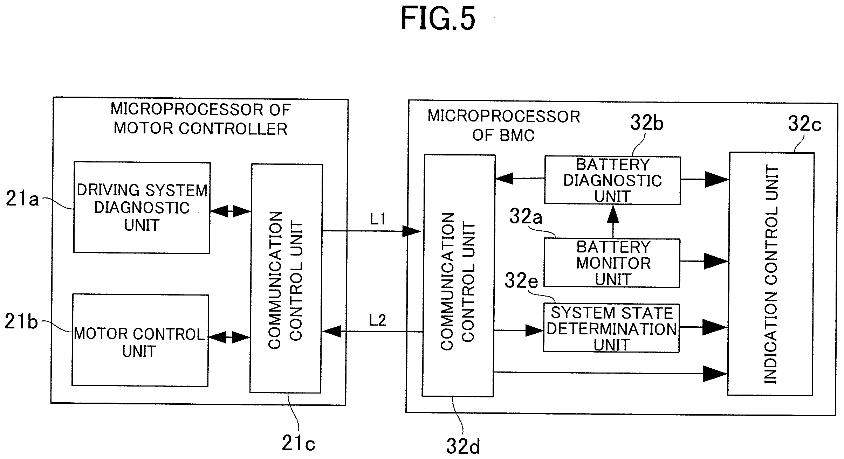

Hereinafter, processes that are performed by the motor controller 21 and the BMC 32 will be described. Fig. 5 is a block diagram illustrating the process performed by the motor controller 21 and the process performed by the BMC 32. First, the process of the motor controller 21 will be described. As illustrated in Fig. 5, the motor controller 21 includes a driving system diagnostic unit 21a, a motor control unit 21b, and a communication control unit 21c. These units may be realized by the microprocessor included in the motor controller 21.

The driving system diagnostic unit 21a determines the abnormality of the driving system 20. For example, the driving system diagnostic unit 21a may detect abnormality of the sensor described above that is used for controlling the electric motor 22. The driving system diagnostic unit 21a determines whether or not the abnormality occurs in the sensor based on a value obtained from the sensor. The driving system diagnostic unit 21a stores, in the memory 25, the information indicating that the abnormality occurs when the abnormality of the driving system 20 is detected. A diagnostic process of the driving system diagnostic unit 21a may be executed when the motor controller 21 is activated or the electric assist bicycle 1 is running.

The communication control unit 21c transmits various types of information to a communication control unit 32d of the BMC 32 and receives various types of information from the same described below. In an example, when the driving system diagnostic unit 21a detects the abnormality of the driving system 20, the communication control unit 21c transmits information indicating that to the BMC 32 through the information transmission path L1. When the BMC 32 receives the information, the BMC 32 drives the indicator 41 and notifies the abnormality to the user. In contrast, when the BMC 32 detects the abnormality of the battery 31, the communication control unit 21c receives the information indicating that from the BMC 32 through the information transmission path L2.

The motor control unit 21b performs control of the electric motor 22 described above based on the pedal force by the user or the speed change level, and the like. In the present embodiment, the indication/operation portion 40 of the battery unit 30 is provided with a mode selection operation portion (specifically, the buttons 42a and 42b) for user to switch the control mode of the electric motor 22 (see Fig. 4). When the buttons 42a and 42b are operated, the motor control unit 21b obtains information indicating the control mode selected by the operation through the communication control unit 21c and executes the control of the motor corresponding to the mode. Furthermore, the motor control unit 21b may stop the driving of the electric motor 22 if necessary, when the information indicating the abnormality of the battery 31 is obtained through the communication control unit 21c.

Next, the process of the BMC 32 will be described. As illustrated in Fig. 5, the BMC 32 has a battery monitor unit 32a, a battery diagnostic unit 32b, an indication control unit 32c, the communication control unit 32d, and a system state determination unit 32e. These units may be realized by the microprocessor included in the BMC 32.

The battery monitor unit 32a monitors the battery 31. For example, the battery monitor unit 32a monitors a temperature, a voltage value, a electronic current value, the number of charging and discharging, and the like of the battery 31. Furthermore, the battery monitor unit 32a calculates the remaining power of the battery 31 based on the electronic current value, a charging time and discharging time.

The battery diagnostic unit 32b determines the abnormality of the battery 31 based on the information obtained by the battery monitor unit 32a. For example, the battery diagnostic unit 32b determines that the abnormality occurs in the battery 31 when a value (for example, temperature) obtained by the battery monitor unit 32a exceeds a reference value. When the abnormality of the battery 31 is detected, the battery diagnostic unit 32b records the information indicating that in the memory 35 included in the BMC 32. Moreover, the abnormality detected by the battery diagnostic unit 32b is not limited to the above described one.

As described above, the communication control unit 32d transmits various types of the information to the communication control unit 21c of the motor controller 21 and receives various types of the information from the same. In an example, when the battery diagnostic unit 32b detects the abnormality of the battery 31, the information indicating that is transmitted to the motor controller 21 through the information transmission path L2. In contrast, the communication control unit 32d receives the information indicating the abnormality of the driving system 20 from the motor controller 21 through the information transmission path L1. Furthermore, the communication control unit 32d transmits the information indicating the control mode selected by the operation portion 42 of the battery unit 30 to the motor controller 21.

The system state determination unit 32e determines whether or not the motor controller 21 is normally operated. For example, the system state determination unit 32e receives, from the motor controller 21, a predetermined signal indicating that the motor controller 21 is normally operated and determines whether or not the motor controller 21 is normally operated based on a predetermined signal. The system state determination unit 32e may determine whether or not the motor controller 21 is normally actuated when the user mounts the battery unit 30 on the battery receptacle 7 (when usage of the electric assist bicycle 1 is started).

The indication control unit 32c performs indications of the remaining power of the battery 31, the abnormality of the battery 31, and the abnormality of the driving system 20, using the indicator 41. For example, the remaining power indicating portion 41B is used for the indications. Hereinafter, a indication form in a case where the abnormality occurs in the battery 31 is referred to as "battery abnormal form" and a indication form in a case where the abnormality occurs in the driving system 20 is referred to as "driving system abnormal form". Furthermore, a normal indication form illustrating the remaining power of the battery 31 or the like is referred to as "normal form"

When the abnormality of the battery 31 or the abnormality of the driving system 20 is detected when the battery unit 30 is mounted on the bicycle body, the indication control unit 32c performs the indication for notifying the abnormality to the user in priority to the indication of the remaining power of the battery 31. That is, the indication control unit 32c drives the indicator 41 in the battery abnormal form or the driving system abnormal form in priority to the normal form. For example, when the abnormality of the battery 31 is detected during the drive of the indicator 41 in the normal form, the indication control unit 32c stops the driving in the normal form and start to drive the indicator 41 in the battery abnormal form. When the abnormality of driving system 20 is detected during the drive of the indicator 41 in the normal form, the indication control unit 32c stops the driving in the normal form and start to drive the indicator 41 in the driving system abnormal form.

Abnormality notification using the indicator 41 may be executed when starting usage of the electric assist bicycle 1, that is, when detecting the mounting of the battery unit 30 on the bicycle body. The indication control unit 32c may drive the indicator 41 by using information that is recorded in the memory 25 by the driving system diagnostic unit 21a in the past and information recorded in the memory 35 by the battery diagnostic unit 32b in the past. Thus, when the user starts usage of the electric assist bicycle 1, it is possible to immediately notify, to the user, the abnormality of the driving system 20 of the bicycle and the abnormality of the battery 31. Furthermore, the abnormality notification using the indicator 41 may be executed during running of the electric assist bicycle 1.

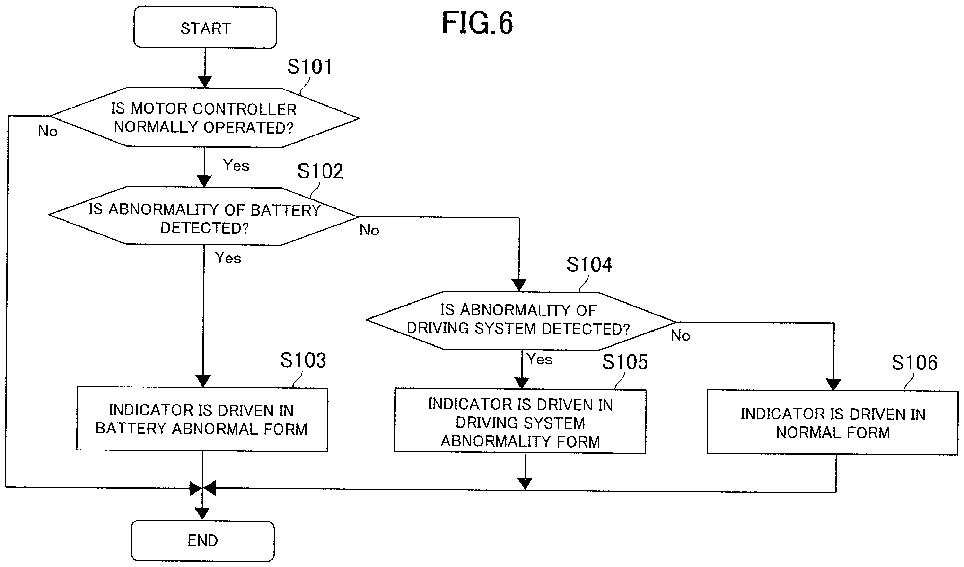

Fig. 6 is a flowchart illustrating an example of the process of the BMC 32 that is executed when the battery unit 30 is mounted on the electric assist bicycle 1. The process of Fig. 6 is repeatedly executed when the battery unit 30 is mounted on the electric assist bicycle 1.

First, the system state determination unit 32e determines whether or not the motor controller 21 is normally operated (S101). As described above, the system state determination unit 32e determines whether or not the motor controller 21 is normally actuated when the user mounts the battery unit 30 on the battery receptacle 7 (when usage of the electric assist bicycle 1 is started). Here, if the motor controller 21 is not normally operated, the process of the BMC 32 is finished without driving the indicator 41 by the indication control unit 32c (without turning on the indicator 41). Thus, the user can determine whether or not the motor controller 21 is operated by the battery unit 30 mounted on the battery receptacle 7.

If the motor controller 21 is normally operated, the battery diagnostic unit 32b determines whether or not the abnormality occurs in the battery 31 (S102). The battery diagnostic unit 32b may determine whether or not the abnormality occurs in a battery 31 during running of the bicycle. Furthermore, the battery diagnostic unit 32b may determine whether or not the abnormality occurs in the battery 31 based on the information that is recorded in the memory 25 in the past. Here, if the abnormality occurs in the battery 31, the indication control unit 32c drives the indicator 41 in the battery abnormal form described above and notifies the abnormality of the battery 31 to the user. If the abnormality of the battery 31 occurs, the information indicating that is transmitted to the motor controller 21. Then, the drive of the electric motor 22 is limited by the motor control unit 21b. Furthermore, the BMC 32 may prohibit the electronic power supply from the battery 31 to the motor driving circuit 23.

If the abnormality of the battery 31 does not occur, the BMC 32 determines whether or not the abnormality occurs in the driving system 20 based on the information from the motor controller 21 (S104). If the abnormality occurs in the driving system 20, the indication control unit 32c drives the indicator 41 in the driving system abnormal form described above and notifies the abnormality of the driving system 20 to the user (S105). At this time, the drive of the electric motor 22 is also limited by the motor control unit 21b. Furthermore, the BMC 32 may prohibit the electronic power supply from the battery 31 to the motor driving circuit 23.

If the abnormality does not occur in the driving system 20, the indication control unit 32c obtains the remaining power of the battery 31 calculated by the battery monitor unit 32a and drives the indicator 41 in the form indicating the remaining power (normal form) (S106).

The BMC 32 repeatedly executes such a process. According to such a process, if the motor controller 21 is normally operated and the abnormality of the battery 31 or the abnormality of the driving system 20 is not detected during running of the bicycle, the remaining power of the battery 31 is always indicated in the indicator 41.

Moreover, if the motor control unit 21b stops the drive of the electric motor 22 for a reason (for example, the remaining power of the battery 31 falls below a predetermined value or becomes 0) other than the abnormality detected by diagnostic sections 32b and 21a during the running of the bicycle (if the assist is stopped), the indication control unit 32c may stop the drive of the indicator 41 in the normal form. In this case, the indication control unit 32c may turn off the indicator 41 and may drive the indicator 41 in an indication form different from the normal form indicating that the remaining power of the battery 31 falls below the predetermined value. Thus, the user can be notified that the assist by the electric motor 22 is stopped.

In a state where the battery unit 30 is removed from the bicycle body, the indication control unit 32c drives the indicator 41 in the normal form or the battery abnormal form, and set the limit described above on the drive. In an example, the indication control unit 32c limits the indication time of the indicator 41. Specifically, when operating the operation button 42c, the indication control unit 32c drives the indicator 41 in the normal form or the battery abnormal form only for a predetermined time. In a state where the abnormality of the battery 31 is detected by the battery diagnostic unit 32b, the indication control unit 32c drives the indicator 41 in the battery abnormal form. In a state where the abnormality of the battery 31 is not detected, the indication control unit 32c drives the indicator 41 in the normal form. The indication control unit 32c stops the drive of the indicator 41 and turns off the indicator 41 when the predetermined time has elapsed after the operation button 42c is operated. Moreover, the limit of the indication by the indication control unit 32c is not limited to the present embodiment. For example, when the predetermined time has elapsed after the operation button 42c is operated, the indication control unit 32c may decrease the brightness of the indicator 41.

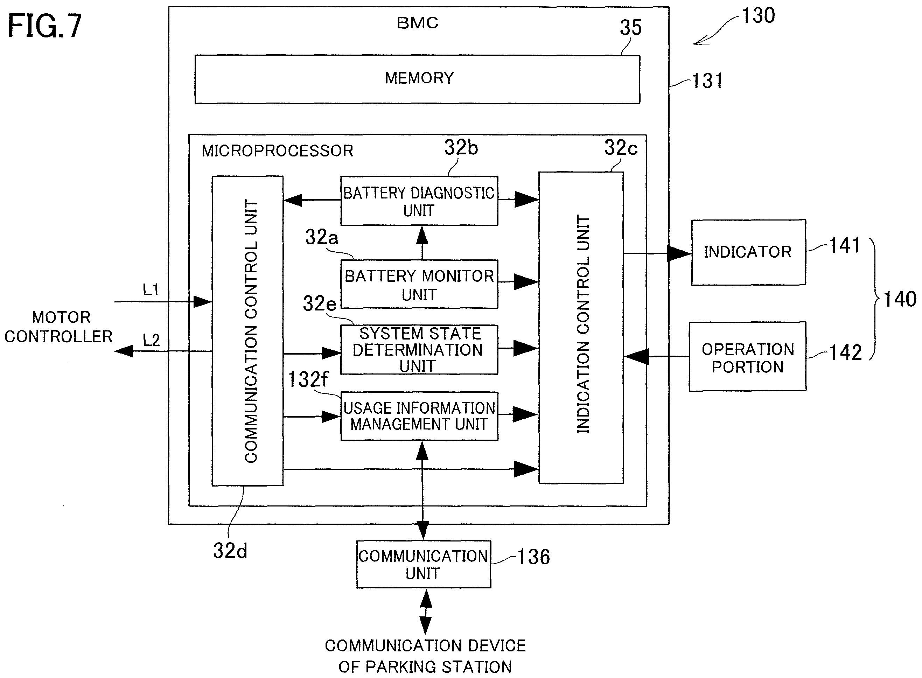

Fig. 7 is a block diagram illustrating a modified example of the battery unit 30. In Fig. 7, the same reference numerals are given to the same portions described above. Furthermore, in Fig. 7, a battery 31 constituting a battery unit 130 is omitted.

The electric assist bicycle 1 is a bicycle to be rented by the user. A plurality of parking stations are set in a town and the electric assist bicycles 1 are stored in each parking station. Furthermore, the battery unit 130 is attainable to and detachable from a bicycle body of the electric assist bicycle 1 and is owned by the user. The battery unit 130 illustrated in Fig. 7 has a function for managing a usage history of the electric assist bicycle 1 by the user.

Specifically, the battery unit 130 includes a communication unit 136. The communication unit 136 transmits information regarding usage of the electric assist bicycle 1 by the user to a communication device disposed in the parking station and receives the information from the same. For example, an unique code (hereinafter, referred to as station code) is given to each of a plurality of parking stations set in town. The communication unit 136 receives the station code from the communication device of the parking station. The communication unit 136 receives the station code and thereby the battery unit 130 can grasp a parking station in which the user having the battery unit 130 rents the electric assist bicycle 1 and a station in which the electric assist bicycle 1 is returned. For example, the communication unit 136 employs a module for a short-range wireless communication or an IC chip. A communication device of the parking station may be provided in each of a plurality of locking devices 90 for locking the electric assist bicycle 1. Alternatively, one communication device may be provided in one parking station.

The BMC 32 includes a usage information management unit 132f in addition to the battery diagnostic unit 32b and the like described above. The usage information management unit 132f obtains information regarding usage of the electric assist bicycle 1 by the user and records the information in the memory 35 (hereinafter, the information is referred to as bicycle usage information). For example, the bicycle usage information is a usage time or a running distance, and the like. Preferably, even after usage of the electric assist bicycle 1 is finished by the user, the bicycle usage information recorded in the past or previous time continues to be kept in the memory 35.

The usage information management unit 132f may calculate new bicycle usage information based on the bicycle usage information obtained in the past. For example, in a case where the bicycle usage information is the usage time or the running distance, the usage information management unit 132f may update the information whenever using the bicycle. Thus, the usage information management unit 132f can calculate a total usage time or calculate a total running distance by summing the usage time or the running distance in a certain period. Furthermore, bicycle usage information may be the number of usage times of the bicycle by the user.

For example, the usage time (usage period)is obtained by counting time from a time when the motor controller 21 is actuated to a time when the operation of the motor controller 21 is finished. The number of usage times is obtained by counting the number of times at which the motor controller 21 is actuated. Information regarding the output of the bicycle speed sensor 24B provided in the driving system 20 may be received through the communication control unit 32d and the running distance can be calculated based on the information. Moreover, the running distance may be calculated by the motor controller 21 and the usage information management unit 132f may receive the calculated information.

The usage information management unit 132f may calculate a rental fee charged to the user and the fee may be recorded in the memory 35. In a system in which the rental fee is determined according to the total usage time, the usage information management unit 132f may calculate the rental fee based on the total usage time.

The usage information management unit 132f may record a path in which the user uses the electric assist bicycle 1 in the memory 35 by using a station code received through the communication unit 136. The path may employs, for example, the parking station (hereinafter, referred to as usage start station) in which the user starts the usage of the electric assist bicycle 1 and the parking station (hereinafter, referred to as usage finish station) in which the user finishes the usage of the electric assist bicycle 1.

The BMC 32 may include a table in which the bicycle usage information is recorded. That is, the information described above such as the usage time or the path, the running distance, and the like for one time of usage may be recorded in the table.

Furthermore, the usage information management unit 132f may perform the calculation based on a plurality of types of information such as the usage time or the number of usage times, the running distance, and the path (usage start station and usage finish station) described above. For example, the usage information management unit 132f may calculate the number of usage times for each usage start station and may record the number in the memory 35.

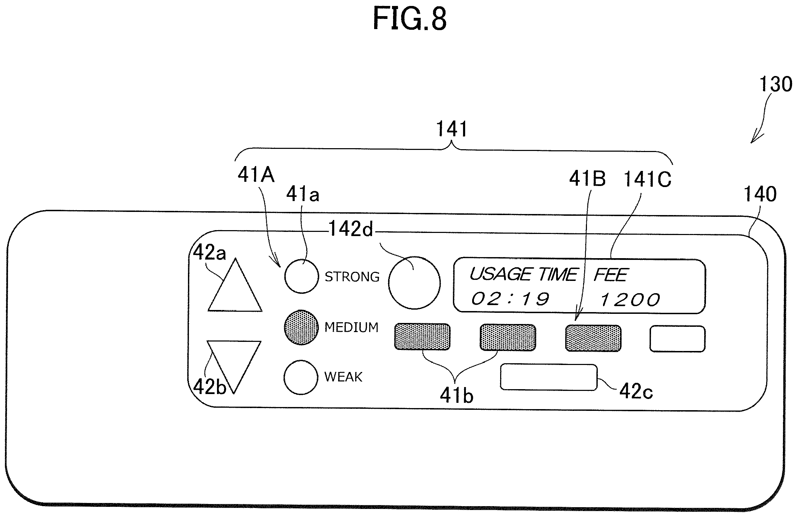

Fig. 8 is a modified example of the indication/operation portion 40. A indication/operation portion 140 illustrated in Fig. 8 is configured to indicate bicycle usage information obtained by the usage information management unit 132f.

Specifically, an indicator 141 of the indication /operation portion 140 includes a display screen 141C capable of displaying characters or symbols in addition to the remaining power indicating portion 41B and the like described above. Furthermore, the indication/operation portion 140 includes an operation button 142d for switching indications in the display screen 141C. Control of the display contents in the display screen 141C may be executed by the indication control unit 32c described above.

The indication control unit 32c indicates the bicycle usage information described above on the display screen 141C. That is, the indication control unit 32c indicates the usage time (elapsed time from start of using), the usage start station, and the like. Furthermore, the indication control unit 32c may indicate the bicycle usage information obtained based on a plurality of types of bicycle usage information on the display screen 141C. For example, a total usage time or a total running distance, a rental fee, and the like may be displayed.

A GPS receiver or an acceleration sensor, and the like may be mounted on the battery unit 130. Furthermore, the battery unit 130 may receive or hold in advance map information. In this case, the indication control unit 32c may obtain a current position of the battery unit 130 and may calculate a position or a direction, and a distance of the nearest parking station based on the map information, and may display the information on the display screen 141C.

As described above, the electric assist bicycle 1 includes the diagnostic section 21a for detecting the abnormality of the driving system 20 and the information transmission path L1 for transmitting the information indicating the abnormality of the driving system 20 from the driving system 20 to the battery unit 30. The indicator 41 of the battery unit 30 indicates the remaining power of the battery 31 and the abnormality of the driving system 20. Thus, it is possible to prevent erroneous recognition by users that the assist force is decreased due to the remaining power of the battery 31 becoming zero when the assist force of the electric motor 22 is decreased due to the abnormality of the driving system 20.

Furthermore, the BMC 32 set the limit regarding the indication time of the indicator 41 in a state where the battery unit 30 is removed from the bicycle body. The BMC 32 eases the limit in a state where the battery unit 30 is mounted on the bicycle body. Thus, the information desired by the user such as the remaining power of the battery 31 can be presented through the indicator 41 of the battery unit 30 in either of a state where the battery unit 30 is mounted on the bicycle body and a state where the battery unit 30 is not mounted on the bicycle body. Furthermore, electronic power consumption in the indicator 41 can be reduced in the state where the battery unit 30 is not mounted on the bicycle body.

Moreover, the present teaching is not limited to the electric assist bicycle 1 described above and may be variously modified.

Furthermore, in the above description, the up button 42a and the down button 42b are provided as the mode selection operation section of the operation portion 42. However, the buttons may not necessarily be provided. In this case, the motor controller 21 may not have a plurality of control modes for the control of the electric motor 22.

In the above description, the BMC 32 switches the indication between the remaining power of the battery 31 and the abnormality, using the common portion (specifically, the remaining power indicating portion) in the indicator 41. However, the BMC 32 may indicate the abnormality of the driving system 20 and the abnormality of the battery 31 with a portion (light emitting portion) different from the portion in which the remaining power of the battery 31 is indicated in the indicator 41. For example, in the example illustrated in Fig. 8, the abnormality of the driving system 20 and the abnormality of the battery 31 may be indicated in the display screen 141C.

In the above description, a plurality of light emitting portions 41b are provided in the remaining power indicating portion 41B. However, only one light emitting portion 41b may be provided in the remaining power indicating portion 41B. Also in this case, the normal form, the battery abnormal form, and the driving system abnormality form can be realized. For example, in the normal form, the light emitting portion 41b emits the light with an emission color corresponding to the remaining power of the battery 31 and, in the battery abnormal form and the driving system abnormality form, the abnormality of the battery 31 and the abnormality of the driving system 20 may be indicated by blinking frequency of the light emitting portion 41b.

The battery diagnostic unit 32b detecting the abnormality of the battery 31 may not necessarily be provided in the BMC 32. That is, the function for detecting the abnormality of the battery 31 may be provided in the motor controller 21.

## Claims

1. An electric assist bicycle comprising:
a driving system (20) including an electric motor (22) for assisting a pedal force applied to a pedal (2) and a motor controller (21) configured to control the electric motor (22);
a battery unit (30) attainable to and detachable from a bicycle body, the battery unit (30) including a battery (31) configured to accumulate electronic power to be supplied to the electric motor (22), a controller (32) configured to control the battery (31), and an indicator (41);
the electric assist bicycle further comprises:
a diagnostic unit (21a, 32b) configured to detect abnormality of the driving system (20); and
an information transmission path (L1) configured to transmit information indicating the abnormality of the driving system (20) from the driving system (20) to the battery unit (30), wherein the indicator (41) of the battery unit (30) is configured to indicate the abnormality of the driving system (20), **characterized in that** the indicator (41) of the battery unit (30) is configured to indicate a remaining power of the battery (31) and the abnormality of the driving system (20), and
the controller (32) of the battery unit (30) is configured to set a predetermined limit on the indication of the indicator (41) when the battery unit (30) is removed from a bicycle body, and the controller (32) of the battery unit (30) is configured to ease the predetermined limit when the battery unit (30) is mounted on the bicycle body.

2. An electric assist bicycle according to claim 1, **characterized in that** the indicator (41) of the battery unit (30) is configured to switch an indication thereof between the remaining power of the battery (31) and the abnormality of the driving system (20).

3. An electric assist bicycle according to claim 1 or 2, **characterized in that** the indicator (41) of the battery unit (30) is configured to indicate the abnormality of the driving system (20) in priority to the remaining power of the battery (31).

4. An electric assist bicycle according to least one of the claims 1 to 3, **characterized in that** the diagnostic unit (32b) is further configured to detect abnormality of the battery (31), and
wherein the indicator (41) is configured to indicate the abnormality of the driving system (20) and the abnormality of the battery (31).

5. An electric assist bicycle according to claim 4, **characterized in that** the indicator (41) is configured to indicate the abnormality of the driving system (20) and the abnormality of the battery (31) in different forms from each other.

6. An electric assist bicycle according to claim 4 or 5, **characterized in that** the indicator (41) includes at least one light emitting portion (41b), and the indicator (41) is configured to drive the at least one light emitting portion (41b) in the different forms from each other when indicating the remaining power of the battery (31) and when indicating the abnormality of the driving system (20).

7. An electric assist bicycle according to at least one of the claims 1 to 6, **characterized by** a monitor unit (32a) configured to determine the remaining power of the battery (31).

8. An electric assist bicycle according to at least one of the claims 1 to 7, **characterized by** a saddle (9) for a user to sit, wherein the indicator (41) is disposed further forward than the saddle (9).

9. An electric assist bicycle according to at least one of the claims 1 to 8, **characterized in that** the predetermined limit on the indication of the indicator (41) is a limit on a time for indicating the information.

10. An electric assist bicycle according to at least one of the claims 1 to 9, **characterized in that** the controller (32) of the battery unit (30) includes an operation portion (42) for receiving an operation by the user and
the controller (32) of the battery unit (30) is configured to release the predetermined limit when the operation portion receives the operation by the user in a state where the battery (31) is removed from the bicycle body.

11. An electric assist bicycle according to any one of claims 1 to 10, **characterized in that** the controller (32) of the battery unit (30) is configured to indicate, on the indicator (41), bicycle usage information that is information regarding usage of the bicycle by a user.

12. An electric assist bicycle according to claim 11, **characterized in that** the battery unit (30) includes a memory (25, 35) configured to store the bicycle usage information, the memory (25, 35) is configured to continue to store the bicycle usage information even after the battery unit (30) is removed from the bicycle body.

13. An electric assist bicycle according to claim 12, **characterized in that** the controller (32) of the battery (31) is configured to calculate new bicycle usage information based on the bicycle usage information stored in the memory (25, 35) after the battery unit (30) is removed from the bicycle body and bicycle usage information that is newly obtained when the battery (31) is mounted on the bicycle body again.

## Patentansprüche

1. Ein Elektro-Unterstützungs-Fahrrad, das umfasst:
ein Antriebs-System (20), das einen Elektro-Motor (22) zum Unterstützen einer Pedalkraft, die auf ein Pedal (2) ausgeübt ist, und eine Motor-Steuerung (21), die konfiguriert ist, um den Elektro-Motor (22) zu steuern, beinhaltet;
eine Batterie-Einheit (30), die erreichbar für und abnehmbar von einem Fahrrad-Körper ist, wobei die Batterie-Einheit (30) eine Batterie (31), die konfiguriert ist, um elektronische Energie zu akkumulieren, die dem Elektro-Motor (22) zuzuführen ist,
eine Steuerung (32), die konfiguriert ist, um die Batterie (31) zu steuern, und einen Anzeiger (41) beinhaltet;
das Elektro-Unterstützungs-Fahrrad weist weiter auf:
eine Diagnose-Einheit (21a, 32b), die so konfiguriert ist, dass sie eine Abnormalität des Antriebs-Systems (20) erfasst; und
einen Informations-Übertragungs-Pfad (L1), der so konfiguriert ist, dass er Informationen, welche die Abnormalität des Antriebs-Systems (20) anzeigen, von dem Antriebs-System (20) zu der Batterie-Einheit (30) überträgt, wobei der Anzeiger (41) der Batterie-Einheit (30) konfiguriert ist, die Abnormalität des Antriebs-Systems (20) anzuzeigen, **dadurch gekennzeichnet, dass**
der Anzeiger (41) der Batterie-Einheit (30) konfiguriert ist, eine verbleibende Leistung der Batterie (31) und die Abnormalität des Antriebs-Systems (20) anzuzeigen, und
die Steuerung (32) der Batterie-Einheit (30) konfiguriert ist, einen vorbestimmten Grenzwert für die Anzeige des Anzeigers (41) zu setzen, wenn die Batterie-Einheit (30) von einem Fahrrad-Körper entfernt wird, und die Steuerung (32) der Batterie-Einheit (30) konfiguriert ist, den vorbestimmten Grenzwert erleichtert, wenn die Batterie-Einheit (30) an dem Fahrrad-Körper montiert ist.

2. Ein Elektro-Unterstützungs-Fahrrad gemäß Anspruch 1, **dadurch gekennzeichnet, dass** der Anzeiger (41) der Batterie-Einheit (30) konfiguriert ist, eine Anzeige davon zwischen der verbleibenden Leistung der Batterie (31) und der Abnormalität des Antriebs-Systems (20) umzuschalten.

3. Ein Elektro-Unterstützungs-Fahrrad gemäß Anspruch 1 oder 2, **dadurch gekennzeichnet, dass** der Anzeiger (41) der Batterie-Einheit (30) konfiguriert ist, die Abnormalität des Antriebs-Systems (20) vorrangig vor der verbleibenden Leistung der Batterie (31) anzuzeigen.

4. Ein Elektro-Unterstützungs-Fahrrad gemäß zumindest einem der Ansprüche 1 bis 3, **dadurch gekennzeichnet, dass** die Diagnose-Einheit (32b) ferner konfiguriert ist, eine Abnormität der Batterie (31) zu erfassen, und
wobei der Anzeiger (41) konfiguriert ist, die Abnormalität des Antriebs-Systems (20) und die Abnormalität der Batterie (31) anzuzeigen.

5. Ein Elektro-Unterstützungs-Fahrrad gemäß Anspruch 4, **dadurch gekennzeichnet, dass** der Anzeiger (41) konfiguriert ist, die Abnormität des Antriebs-Systems (20) und die Abnormität der Batterie (31) in unterschiedlichen Formen voneinander anzuzeigen.

6. Ein Elektro-Unterstützungs-Fahrrad gemäß Anspruch 4 oder 5, **dadurch gekennzeichnet, dass** der Anzeiger (41) mindestens einen licht-emittierenden Abschnitt (41b) beinhaltet und der Anzeiger (41) konfiguriert ist, den mindestens einen licht-emittierenden Abschnitt (41b) in den unterschiedlichen Formen voneinander anzutreiben, wenn sie die verbleibende Leistung der Batterie (31) angezeigt ist und wenn sie die Abnormalität des Antriebs-Systems (20) anzeigt ist.

7. Ein Elektro-Unterstützungs-Fahrrad gemäß zumindest einem der Ansprüche 1 bis 6, **gekennzeichnet durch** eine Überwachungs-Einheit (32a), die konfiguriert ist, die verbleibende Leistung der Batterie (31) zu bestimmen.

8. Ein Elektro-Unterstützungs-Fahrrad gemäß zumindest einem der Ansprüche 1 bis 7, **gekennzeichnet durch** einen Sattel (9) zum Sitzen für einen Benutzer, wobei der Anzeiger (41) weiter vorne als der Sattel (9) angeordnet ist.

9. Ein Elektro-Unterstützungs-Fahrrad gemäß zumindest einem der Ansprüche 1 bis 8, **dadurch gekennzeichnet, dass** die vorgegebene Grenze für die Anzeige des Anzeigers (41) eine Grenze für einen Zeitpunkt für die Anzeige der Information ist.

10. Ein Elektro-Unterstützungs-Fahrrad gemäß zumindest einem der Ansprüche 1 bis 9, **dadurch gekennzeichnet, dass** die Steuerung (32) der Batterie-Einheit (30) einen Betätigungs-Abschnitt (42) zur Aufnahme einer Betätigung durch den Benutzer beinhaltet und
die Steuerung (32) der Batterie-Einheit (30) so konfiguriert ist, dass sie den vorbestimmten Grenzwert freigibt, wenn der Betätigungs-Abschnitt die Betätigung durch den Benutzer in einem Zustand erhält, in dem die Batterie (31) aus dem Fahrrad-Körper entfernt ist.

11. Ein Elektro-Unterstützungs-Fahrrad gemäß einem der Ansprüche 1 bis 10, **dadurch gekennzeichnet, dass** die Steuerung (32) der Batterie-Einheit (30) konfiguriert ist, auf dem Anzeiger (41) Informationen über die Fahrrad-Nutzung anzuzeigen, die Informationen über die Nutzung des Fahrrads durch einen Benutzer sind.

12. Ein Elektro-Unterstützungs-Fahrrad gemäß Anspruch 11, **dadurch gekennzeichnet, dass** die Batterie-Einheit (30) einen Speicher (25, 35) beinhaltet, der konfiguriert ist, die Informationen zur Fahrrad-Nutzung zu speichern,
der Speicher (25, 35) konfiguriert ist, die Informationen zur Fahrrad-Nutzung auch dann noch zu speichern, wenn die Batterie-Einheit (30) aus dem Fahrrad-Körper entfernt ist.

13. Ein Elektro-Unterstützungs-Fahrrad gemäß Anspruch 12, **dadurch gekennzeichnet, dass** die Steuerung (32) der Batterie (31) konfiguriert ist, neue Fahrrad-Nutzungs-Informationen auf der Grundlage der Fahrrad-Nutzungs-Informationen, die in dem Speicher (25, 35) gespeichert sind, nachdem die Batterie-Einheit (30) aus dem Fahrrad-Körper entfernt ist, und der Fahrrad-Nutzungs-Informationen, die neu erhalten sind, wenn die Batterie (31) wieder am Fahrrad-Körper montiert ist, berechnet.

## Revendications

1. Vélo à assistance électrique comprenant :
un système d'entraînement (20) incluant un moteur électrique (22) pour assister une force de pédalage appliquée à une pédale (2) et un contrôleur de moteur (21) configuré pour contrôler le moteur électrique (22) ;
une unité de batterie (30) accessible sur et détachable d'un cadre de vélo, l'unité de batterie (30) incluant une batterie (31) configurée pour accumuler une puissance électronique à fournir au moteur électrique (22), un contrôleur (32) configuré pour contrôler la batterie (31), et un indicateur (41) ;
le vélo à assistance électrique comprend en outre :
une unité de diagnostic (21a, 32b) configurée pour détecter une anomalie du système d'entraînement (20) ; et
une voie de transmission d'informations (L1) configurée pour transmettre des informations indiquant l'anomalie du système d'entraînement (20) du système d'entraînement (20) à l'unité de batterie (30), dans lequel l'indicateur (41) de l'unité de batterie (30) est configuré pour indiquer l'anomalie du système d'entraînement (20), **caractérisé en ce que**
l'indicateur (41) de l'unité de batterie (30) est configuré pour indiquer une puissance restante de la batterie (31) et l'anomalie du système d'entraînement (20), et
le contrôleur (32) de l'unité de batterie (30) est configuré pour définir une limite prédéterminée sur l'indication de l'indicateur (41) lorsque l'unité de batterie (30) est retirée d'un cadre de vélo, et le contrôleur (32) de l'unité de batterie (30) est configuré pour faciliter la limite prédéterminée lorsque l'unité de batterie (30) est montée sur le cadre de vélo.

2. Le vélo à assistance électrique selon la revendication 1, **caractérisé en ce que** l'indicateur (41) de l'unité de batterie (30) est configurée pour basculer une indication de celui-ci entre la puissance restante de la batterie (31) et l'anomalie du système d'entraînement (20).

3. Le vélo à assistance électrique selon la revendication 1 ou 2, **caractérisé en ce que** l'indicateur (41) de l'unité de batterie (30) est configurée pour indiquer l'anomalie du système d'entraînement (20) en priorité par rapport à la puissance restante de la batterie (31).

4. Le vélo à assistance électrique selon au moins une des revendications 1 à 3, **caractérisé en ce que** l'unité de diagnostic (32b) est configurée en outre pour détecter une anomalie de la batterie (31), et
dans lequel l'indicateur (41) est configuré pour indiquer l'anomalie du système d'entraînement (20) et l'anomalie de la batterie (31).

5. Le vélo à assistance électrique selon la revendication 4, **caractérisé en ce que** l'indicateur (41) est configuré pour indiquer l'anomalie du système d'entraînement (20) et l'anomalie de la batterie (31) sous des formes différentes l'une de l'autre.

6. Le vélo à assistance électrique selon la revendication 4 ou 5, **caractérisé en ce que** l'indicateur (41) inclut au moins une partie électroluminescente (41b), et l'indicateur (41) est configuré pour piloter l'au moins une partie électroluminescente (41b) sous les formes différentes l'une de l'autre lors d'une indication de la puissance restante de la batterie (31) et lors d'une indication de l'anomalie du système d'entraînement (20).

7. Le vélo à assistance électrique selon au moins une des revendications 1 à 6, **caractérisé par** une unité de surveillance (32a) configurée pour déterminer la puissance restante de la batterie (31).

8. Le vélo à assistance électrique selon au moins une des revendications 1 à 7, **caractérisé par** une selle (9) pour qu'un utilisateur s'assoit, dans lequel l'indicateur (41) est disposé plus en avant de la selle (9) .

9. Le vélo à assistance électrique selon au moins une des revendications 1 à 8, **caractérisé en ce que** la limite prédéterminée sur l'indication de l'indicateur (41) est une limite sur une durée pour indiquer les informations.

10. Le vélo à assistance électrique selon au moins une des revendications 1 à 9, **caractérisé en ce que** le contrôleur (32) de l'unité de batterie (30) inclut une partie d'opération (42) pour recevoir une opération par l'utilisateur et
le contrôleur (32) de l'unité de batterie (30) est configuré pour libérer la limite prédéterminée lorsque la partie d'opération reçoit l'opération par l'utilisateur dans un état où la batterie (31) est retirée du cadre de vélo.

11. Le vélo à assistance électrique selon l'une des revendications 1 à 10, **caractérisé en ce que** le contrôleur (32) de l'unité de batterie (30) est configuré pour indiquer, sur l'indicateur (41), des informations d'utilisation de vélo qui sont des informations relatives à un utilisateur du vélo par un utilisateur.

12. Le vélo à assistance électrique selon la revendication 11, **caractérisé en ce que** l'unité de batterie (30) inclut une mémoire (25, 35) configurée pour stocker les informations d'utilisation de vélo, la mémoire (25, 35) est configurée pour continuer de stocker les informations d'utilisation de vélo même après que l'unité de batterie (30) est retirée du cadre de vélo.

13. Le vélo à assistance électrique selon la revendication 12, **caractérisé en ce que** le contrôleur (32) de la batterie (31) est configuré pour calculer de nouvelles informations d'utilisation de vélo selon les informations d'utilisation de vélo stockées dans la mémoire (25, 35) après que l'unité de batterie (30) est retirée du cadre de vélo et des informations d'utilisation de vélo qui sont nouvellement obtenues lorsque la batterie (31) est montée à nouveau sur le cadre de vélo.
